# EUROPÄISCHE PATENTANMELDUNG

(11) **EP 0 878 414 A1**
(43) Veröffentlichungstag der Anmeldung: **18.11.1998**
(21) Anmeldenummer: 97119332.1
(22) Anmeldetag: 05.11.1997
(51) Int. Cl.: B65D 88/66

(54) **Austragseinrichtung für ein Silo**

(30) Priorität: 14.05.1997 DE 19720143
(71) Anmelder: PKA Umwelttechnik GmbH & Co. KG., 73430 Aalen (DE)
(72) Erfinder: Künzel, Willi, Dipl.-Ing., 73434 Aalen (DE); Scholz, Klaus, 73441 Bopfingen (DE)
(74) Vertreter: Lorenz, Werner, Dipl.-Ing.

(57) **Zusammenfassung**

Ein Silo, insbesondere Hochsilo für schwerfließende, brückenbildende Schüttgüter mit ungleichen Materialabmessungen, insbesondere Müll, ist mit einem Silomantel und einer Austragseinrichtung im unteren Bereich des Silos versehen. Die Austragseinrichtung weist wenigstens zwei zur Mitte hin nach unten geneigte Vibrationsböden (1) auf, welche auf Federeinrichtungen (2) gelagert sind. Die wenigstens zwei Vibrationsböden werden durch ein oder mehrere Vibrationseinrichtungen (4), welche an den Vibrationsböden angebracht sind, in Vibration versetzt. Die wenigstens zwei Vibrationsböden weisen eine gegeneinander gerichtete Neigung auf. Die wenigstens zwei Vibrationsböden sind derart angeordnet, daß deren Innenkanten in vertikaler Richtung höhenversetzt zueinander liegen. Die wenigstens zwei Vibrationsböden überlappen sich wenigstens teilweise mit ihren Innenkanten oder die Innenkanten weisen einen bestimmten Abstand voneinander in horizontaler Richtung auf. Unterhalb der wenigstens zwei Vibrationsböden ist ein Materialaustragsschacht (5) angebracht, in welchem ein Austragsglied (6) angeordnet ist, durch die ein dosierter Materialaustrag kontinuierlich oder im Intervallbetrieb erfolgt.

## Beschreibung

Die Erfindung betrifft ein Silo, insbesondere Hochsilo für schwerfließende, brückenbildende Schüttgüter mit ungleichen Materialabmessungen, insbesondere Müll, mit einem Silomantel und einer Austragseinrichtung im unteren Bereich des Silos.

Bei den bisher bekannten Silos für schwerfließende, brückenbildende Stoffe bestehen die Austragseinrichtungen aus Schnecken, rotierenden Armen, Mitnehmern oder ähnlichen, welche über einem Siloboden im gelagerten Material arbeiten. Das Material wird dabei in ein unter dem Siloboden liegendes Förder- bzw. Dosieraggregat eingetragen.

Da sich die Ausräumwerkzeuge der Austragssysteme im gelagerten Material befinden, müssen sie, um arbeiten zu können, den Druck und das Volumen des ganzen im Silo gelagerten Materials überwinden. Dies hat zur Folge, daß die Austragseinrichtung entsprechend groß und widerstandsfähig dimensioniert werden muß. Der für die Siloaustragssysteme vorgesehene Antrieb muß extrem leistungsstark sein, damit die Ausräumwerkzeuge auch bei vollem Silo und dem daraus resultierenden enormen Druck ein Entleeren gewährleisten können.

Da bei steigenden Siloabmessungen die Ausräumwerkzeuge und die dafür notwendigen Antriebseinrichtungen immer größer dimensioniert werden müssen, können nur beschränkte Siloabmessungen benutzt werden. Auch die Siloprofile sind durch die sich im Material bewegenden Teile in ihrer Form und Größe beschränkt.

Dadurch, daß sich die Ausräumwerkzeuge im Material befinden, sind diese einem sehr hohen Verschleiß unterworfen. Dies führt zu hohen Wartungs-, Instandsetzungs- und Verschleißkosten. Die Austragseinrichtungen in Silos, insbesondere in Hochsilos für schwerfließende, brückenbildende Schüttgüter fallen daher unverhältnismäßig oft aus bzw. müssen sehr häufig routinemäßig gewartet und überprüft werden.

Bei einem Bruch der Ausräumwerkzeuge muß das im Silo gelagerte Material umständlich durch Bagger mit Müllgreifer aus dem Silo entfernt werden, damit ein Austausch der defekten Teile vorgenommen werden kann.

Die Produktion einer Anlage kann durch die längere Stillstandzeit für die Reparatur der mechanischen Teile im Material und das umständliche zeitaufwendige Entfernen des Materials aus dem Silo erheblich gestört werden. Ein gleichmäßiges störungsfreies Austragen des Materials aus dem Silo ist auch im normalen Betrieb nicht möglich, da die Austragssysteme häufig überprüft werden müssen und dadurch der normale Betriebsablauf gestört wird.

Die bisher bekannten Silos mit Vibrationsböden sind nur zum Austragen von trockenen fließfähigen Schüttgütern geringer Materialabmessung, die nicht zur Brückenbildung neigen, geeignet. Diese Austragseinrichtungen mit Vibrationsböden können daher nur in die wenigsten Silos eingebaut werden. Die möglichen Siloprofile, in denen Austragseinrichtungen mit Vibrationsböden eingesetzt werden können, sind daher erheblich eingeschränkt.

Der vorliegenden Erfindung liegt daher die Aufgabe zugrunde, eine Austragseinrichtung für Silos, insbesondere für Hochsilos für schwerfließende, brückenbildende Schüttgüter mit ungleichen Materialabmessungen zu schaffen, die ein verschleißarmes, intervallmäßiges oder kontinuierliches Entleeren aller Siloprofile mit allen gewünschten Abmessungen gewährleistet, ohne daß die Austragseinrichtung unnötig groß dimensioniert werden muß.

Diese Aufgabe wird erfindungsgemäß durch die Merkmale des kennzeichnenden Teiles des Hauptanspruches gelöst.

Durch die wenigstens zwei Vibrationsböden, die durch ein oder mehrere Vibrationseinrichtungen in Schwung versetzt werden, können aufgrund der gegeneinander gerichteten Neigung der Vibrationsböden sogar schwerfließende, brückenbildende Schüttgüter mit ungleichen Materialabmessungen bewegt werden. Durch die Neigung der Vibrationsböden und ihrem vertikalen und gegebenenfalls horizontalen Abstand wird das im Silo gelagerte Material portionsweise in den unter den Vibrationsböden angebrachten Materialaustragsschacht befördert.

Durch die Anordnung der Vibrationsböden wird vermieden, daß das im Silo aufgehäufte Material direkt in den Austragsschacht fallen kann. Das in dem Materialaustragsschacht angeordnete Austragsglied ermöglicht ein kontinuierliches oder intervallmäßiges Entleeren des Silos. Das Austragsglied wird nur durch das unmittelbar zum Austragen vorgesehene Material belastet.

Dadurch, daß das Austragsglied nicht durch das ganze im Silo befindliche Material belastet wird, kann die Dimensionierung entsprechend geringer ausfallen. Auch die für den Antrieb des Austragsgliedes vorgesehenen Einrichtungen können entsprechend leistungsschwächer im Vergleich zu den bisher notwendigen Antrieben ausgelegt werden. Die bisher notwendige Beschränkung der Siloabmessungen und des Siloprofiles entfallen ebenfalls, da das zu lagernde Material unabhängig, d.h. nicht mehr störend , für die Austragseinrichtung ist. Die Austragseinrichtung ist, da sie sich nicht mehr im Material befindet, keinem hohen Verschleiß unterworfen, d.h. die Wartungs-, Instandhaltungs- und Verschleißkosten sind auf ein Minimum reduziert. Die Gefahr eines Bruches der Austragseinrichtung ist nahezu ausgeschlossen. Dadurch reduziert sich das Risiko, daß die gesamte Produktion aufgrund eines Ausfalles der Austragseinrichtung des Silos zum Stillstand kommt, enorm

Durch den vertikalen und gegebenenfalls den horizontalen Abstand der Vibrationsböden voneinander lassen sich beliebig große Materialien befördern. Die Abstände zwischen den Vibrationsböden, sowohl in horizontaler wie auch in vertikaler Richtung lassen sich individuell auf das zu lagernde Material einstellen.

Durch die Trennung der Austragseinrichtung vom gelagerten Material durch die Vibrationsböden wird außerdem ein materialschonender und energiesparender Austrag der Stoffe erzielt.

Erfindungsgemäß kann ferner vorgesehen sein, daß im Bereich der Vibrationsböden wenigstens eine Luftkanone angeordnet ist, die bei Materialstau einen Luftstoß über den Vibrationsböden in Richtung des Schneckeneinlauftrichters ausübt.

Durch eine Ausgestaltung der Vibrationsböden mit Luftkanonen wird selbst das Austragen schwerst handhabbarer Stoffe ermöglicht. Durch den gezielten Einsatz der Luftkanonen wird darüber hinaus ein besonders energiesparender Materialaustrag gewährleistet. Ein eventuell auftretender Materialstau kann somit leicht durch einen Luftdruckstoß beseitigt werden.

In einer konstruktiven Ausgestaltung der Erfindung kann ferner vorgesehen sein, daß die Steuerung der Vibrationsböden und der Luftkanonen über einen Füllstandmesser erfolgt.

Der Füllstandsmesser ermöglicht eine optimale Steuerung der Luftkanonen und der Vibrationseinrichtungen, die die Vibrationsböden in Schwingungen versetzen. Der Füllstandmesser ermittelt den Füllstand des Materialaustragsschafts und gibt ggf. einen Steuerbefehl an die Vibrationseinrichtungen. Bei einem Materialstau gibt der Füllstandsmesser darüber hinaus einen Steuerbefehl an die Luftkanonen, die dann den Materialstau durch einen Luftdruckstoß auflösen.

Vorteilhafte Weiterbildungen und Ausgestaltungen der Erfindung sind in den weiteren Unteransprüchen beschrieben.

Ein Ausführungsbeispiel der Erfindung ist anhand der Zeichnung prinzipmäßig beschrieben.

Es zeigt:
- Fig. 1: Seitenansicht eines Silos mit einer Austragseinrichtung;
- Fig. 2: Draufsicht auf die Vibrationsböden und die Austragseinrichtung eines Silos;
- Fig. 3: vergrößerte Darstellung nach X aus Fig. 1;
- Fig. 4: vergrößerte Darstellung nach Y aus Fig. 1.
- Fig. 5: Seitenansicht eines Silos mit einer Austragseinrichtung, einer Zwischenwand sowie außenliegenden Vibrationseinrichtungen für die Vibrationsböden;
- Fig. 6: Schnitt nach der Linie VI-VI aus Fig. 5;
- Fig. 7: vergrößerte Darstellung nach Z aus Fig. 6;
- Fig. 8: Seitenansicht eines Silos mit einer Austragseinrichtung, einer Zwischenwand sowie außenliegenden Vibrationseinrichtungen für die Vibrationsböden in einer weiteren Ausführungsform; und
- Fig. 9: Schnitt nach der Linie IX-IX aus Fig. 8.

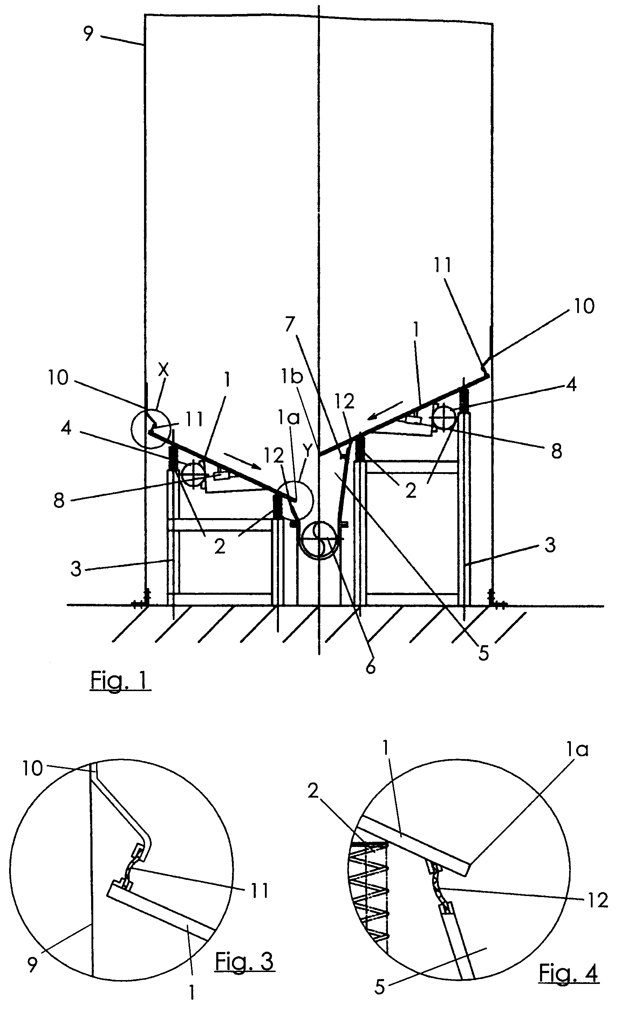

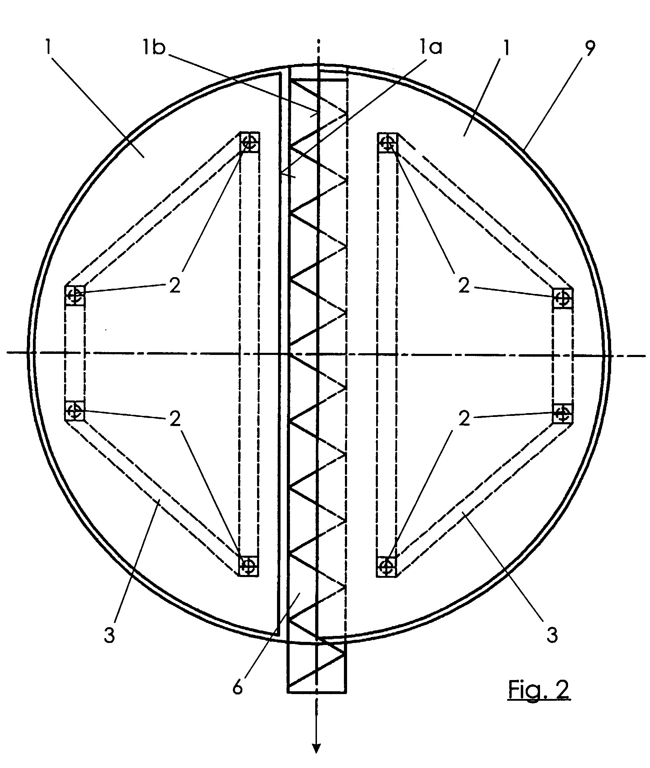

Wie aus Fig. 1 ersichtlich besteht die Austragseinrichtung von Silos, insbesondere von Hochsilos für schwerfließende, brückenbildende Schüttgüter mit ungleichen Materialabmessungen, insbesondere Müll, aus zwei Vibrationsböden 1. Die beiden Vibrationsböden 1 sind auf mehreren Stahl- oder Gummifedern 2 als Federeinrichtung gelagert. Die Vibrationsböden 1 sind über die Gummifedern 2 mit Hilfe einer Unterkonstruktion 3 auf dem Boden des Silos befestigt.

Die Vibrationsböden 1 werden durch Vibrationseinrichtungen 4, welche gemäß Fig. 1 als Unwuchtvibratoren 4 ausgebildet sind, in Vibrationen versetzt. Mit Hilfe der Unwuchtvibratoren 4 wird das im Silo gelagerte Material in Richtung eines Materialaustragschachtes, der als Schneckeneinlauftrichter 5 ausgebildet ist, befördert. In dem Schneckeneinlauftrichter 5 ist ein Austragsglied, das als Dosierschnecke 6 ausgebildet ist und eine Füllstandsanzeige 7 angeordnet.

Das von den gegeneinander geneigten und höhenversetzt angeordneten Vibrationsböden 1 in den Schneckeneinlauftrichter 5 beförderte Material wird durch die Dosierschnecke 6 aus dem Silo ausgetragen. Unterhalb der beiden Vibrationsböden 1 befinden sich Luftkanonen 8, deren Ausblasrichtung auf die Vibrationsböden 1 bzw. das darauf sich befindende Material gerichtet ist. Mit Hilfe dieser Luftkanonen 8 können Materialstaus beseitigt werden. Die Luftkanonen 8 und die Unwuchtvibratoren 4 werden durch den Füllstandsmesser 7 gesteuert.

Der Füllstandsmesser 7 ermittelt die Füllhöhe des Schneckeneinlauftrichters 5 und gibt anhand dieser Informationen Steuerbefehle an die Unwuchtvibratoren 4. Wenn von dem Füllstandsmesser 7 ein Materialstau erkannt wird, leitet er die entsprechenden Steuerimpulse an die Luftkanonen 8.

Wie in Fig. 1 ersichtlich, sind die beiden Vibrationsböden 1 von außen her zur Mitte des Silos hin nach unten geneigt, wobei ihre Innenkanten 1a und 1b höhenversetzt zueinander liegen. Während der in der Zeichnung rechts dargestellte Vibrationsboden mit seiner Innenkante 1b bis zur Silomitte reicht, ist der links dargestellte Vibrationsboden 1 mit seiner Innenkante 1a von der Silomitte zurückversetzt. Auf diese Weise ergibt sich im inneren Bereich zwischen den Vibrationsböden 1 ein vertikaler und ein horizontaler Abstand. Damit ergibt sich ein Zwischenraum in Form eines Einlauftrichters in welchem das im Silo gelagerte Material in den Schneckeneinlauftrichter 5 befördert wird. Der vertikale Abstand der Vibrationsböden 1 läßt sich beliebig einstellen. Dadurch wird gewährleistet, daß Materialien unterschiedlicher Abmessungen problemlos bearbeitet werden können.

Bei dem dargestellten Ausführungsbeispiel besteht zwischen den beiden Innenkanten 1a und 1b der Vibrationsböden 1 in horizontaler Richtung gesehen ein geringfügiger Abstand, da der links dargestellte Vibrationsboden 1 nicht bis zur Mitte reicht. Im Bedarfsfalle ist es jedoch auch möglich, beide Innenkanten 1a und 1b der Vibrationsböden 1 bis zur Silomitte zu führen oder sogar einen der beiden geringfügig darüber hinaus, womit sich eine Überlappung ergibt. Auf diese Weise ist noch stärker sicher gestellt, daß das im Silo sich befindliche Material nicht auf das Austragsglied mit seinem Gewicht lastet. Trotzdem ist ein ausreichend großer Zwischenraum für einen Materialeintrag in den Materialaustragsschacht 5 gegeben.

Wie weiterhin aus der Fig. 2 ersichtlich ist, ist das Silo im Querschnitt kreisförmig ausgebildet. Entsprechend sind die beiden Vibrationsböden 1 dieser Siloform anzupassen, was bedeutet, daß sie jeweils eine halbkreisförmige Form besitzen mit parallel zu einer Silomittenachse verlaufenden Innenkante 1a bzw. 1b. Wie ersichtlich fällt dabei wenigstens annähernd die Innenkante 1b des rechts dargestellten Vibrationsbodens 1 mit einer Mittenachse des Silos zusammen. Selbstverständlich ist es auch möglich, den Querschnitt des Silos in einer beliebigen anderen Form auszubilden, wobei die Vibrationsböden 1 dann eine entsprechende Profilform erhalten.

Die Vibrationsböden 1 können separat und unabhängig vom Einsatz der Luftkanonen 8 betrieben werden. Die Vibrationsböden 1 können außerdem kontinuierlich oder im Intervalleinsatz betrieben werden.

Die Vibrationsböden 1 können gleiche oder unterschiedliche Formen und Abmessungen aufweisen. Fig. 2 zeigt außerdem die Dosierschnecke 6 mit der das Material aus dem Silo ausgetragen werden kann. Die Vibrationsböden 1 können sich in der Mittelachse des Silos überlappen oder wie in Fig. 2 dargestellt, in horizontaler Richtung einen bestimmten Abstand voneinander aufweisen. Der horizontaler Abstand läßt sich genauso wie der vertikale Abstand beliebig einstellen.

Wie in Fig. 1 erkennbar besteht das Silo aus einem Silomantel 9, an dessen Innenseite Leitbleche 10 in geringem Abstand über den Außenkanten der Vibrationsböden 1 angeordnet sind. Zwischen den Leitblechen 10 und den Vibrationsböden 1 sind wie aus Fig. 3 ersichtlich, äußere Dichtmanschetten 11 angeordnet. Mit Hilfe dieser äußeren Dichtmanschetten 11 und dem Leitblech 10 wird verhindert, daß Material aus dem Silo in den Zwischenraum, der von den Vibrationsböden und dem Silomantel 9 gebildet wird, fallen kann. Mit Hilfe der Leitbleche 10 und der äußeren Dichtungsmanschetten 11 werden die Vibrationsböden 1 gegen den Silomantel 9 abgedichtet, wobei sie jedoch Vibrationsbewegungen durchführen können.

Wie aus Fig. 4 ersichtlich ist, erfolgt innenseitig die Abdichtung zwischen den Vibrationsböden 1 und dem Schneckeneinlauftrichter 5 durch innere Dichtmanschetten 12. Mit Hilfe dieser inneren Dichtmanschetten 12 wird sichergestellt, daß das Material, das von den Vibrationsböden 1 kommt, ausschließlich in den Schneckeneinlauftrichter 5 fallen kann und dadurch der Dosierschnecke 6 zugeführt wird. Die Abdichtung zwischen dem Schneckeneinlauftrichter 5 und den beiden Vibrationsböden 1 durch die inneren Dichtmanschetten 12 erlaubt auch ein Bearbeiten von staubenden Schüttgütern.

Durch die äußeren Dichtmanschetten 11 und die inneren Dichtmanschetten 12 wird ein wartungsarmer Betrieb der Austragseinrichtung und damit des gesamten Silos ermöglicht, da ein Reinigen bzw. eine Störung durch fehlgeleitetes Material ausgeschlossen ist.

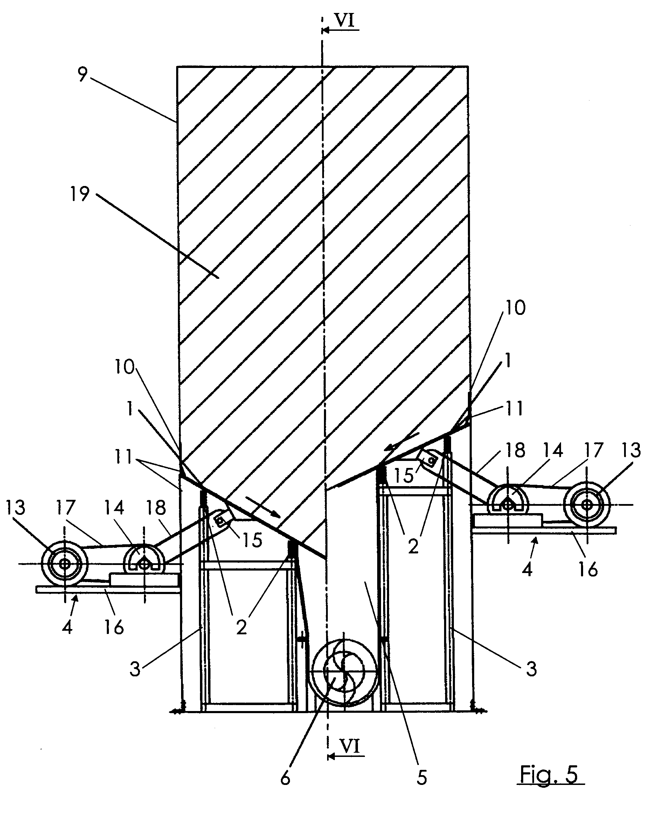

Gemäß der in Fig. 5 dargestellten Ausführungsform sind die Vibrationseinrichtungen 4 als Kurbeltriebe 4 ausgebildet, welche die Vibrationsböden 1 in Vibrationen versetzen. Die Kurbeltriebe 4 weisen jeweils einen Antriebsmotor 13, eine Exzenterscheibe 14 sowie eine jeweils an dem Vibrationsboden 1 angeordnete Schubstange 18 auf. Selbstverständlich kann der Kurbeltrieb 4 auch aus anderen bekannten Einrichtungen aufgebaut sein, weist dabei jedoch immer eine Exzenterscheibe 14 auf.

Der Antriebsmotor 13 und die Exzenterscheibe 14 sind dabei außerhalb oder in einer nicht dargestellten Ausführungsform auch innerhalb des Silos auf einer Halteeinrichtung 16 angeordnet und über einen Riemen 17 miteinander verbunden. Die Schubstange 18 ist auf der einen Seite mit der Exzenterscheibe 14 und auf der anderen Seite über einen Befestigungskloben 15 mit dem Vibrationsboden 1 verbunden.

Durch den Kurbeltrieb 4 wird eine Energieeinsparung erreicht und bei kleinen Silodurchmessern wird durch den außenliegenden Antriebsmotor 13 und der Exzenterscheibe 14 die Montage und Demontage sowie Reparaturen und Wartungsarbeiten vereinfacht. Insbesondere bei kleinen Silos ergibt sich auch eine einfachere und schnellere Fertigung.

Des weiteren ist in Fig. 5 innerhalb des Silomantels 9 eine im wesentlichen vertikal ausgerichtete Zwischenwand 19 dargestellt, welche sich von der Oberseite des Silos zu den Vibrationsböden 1 erstreckt. Dadurch ist es möglich, zwei oder - bei der Verwendung mehrerer Zwischenwände 19 - auch mehrere verschiedenartige Materialien in das Silo zu lagern bzw. zwischen zu speichern. Somit kann ein Silo die Funktion mehrerer Silos übernehmen.

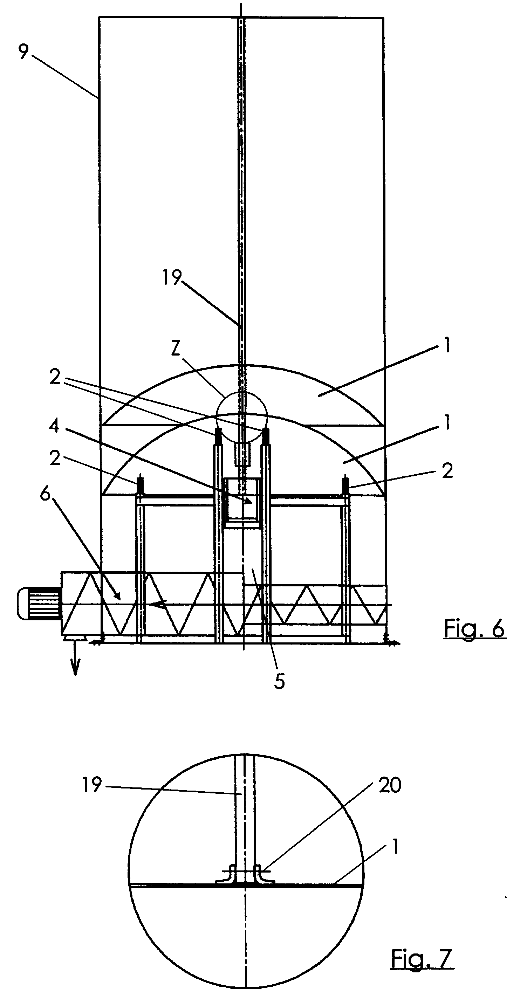

Fig. 6 zeigt einen Schnitt durch das in Fig. 5 dargestellte Silo, wobei die Dosierschnecke 6 in diesem Fall mit zwei verschiedenen Durchmessern versehen ist. Dadurch können die verschiedenen, auf beiden Seiten der Zwischenwand 19 sich befindlichen Stoffe ausgetragen werden. Durch eine Änderung des Durchmessers, der Wendelsteigung und der Drehzahl der Dosierschnecke 6 können verschiedene Körnungen der ausgetragenen Stoffe erreicht werden. Selbstverständlich ist es möglich, auch mehrere Zwischenwände 19 in das Silo einzubringen und die Dosierschnecke 6 dementsprechend oft zu unterteilen.

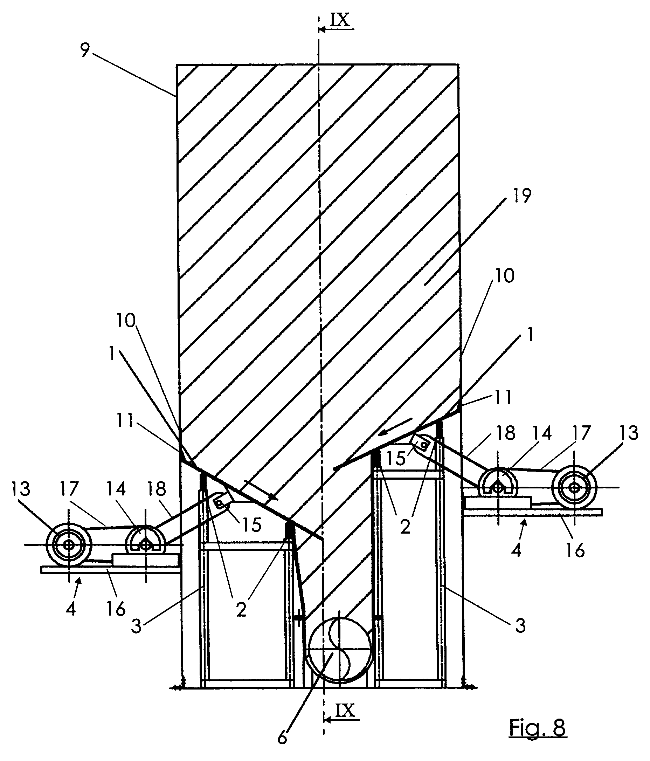

Fig. 7 zeigt die Abdichtung der Zwischenwand 19 gegenüber den Vibrationsböden 1 durch eine Dichtungseinrichtung 20. Diese ist als L-förmiger Gummistreifen 20 ausgebildet, an der Zwischenwand 19 angeschraubt und liegt lose auf den Vibrationsböden 1 auf.

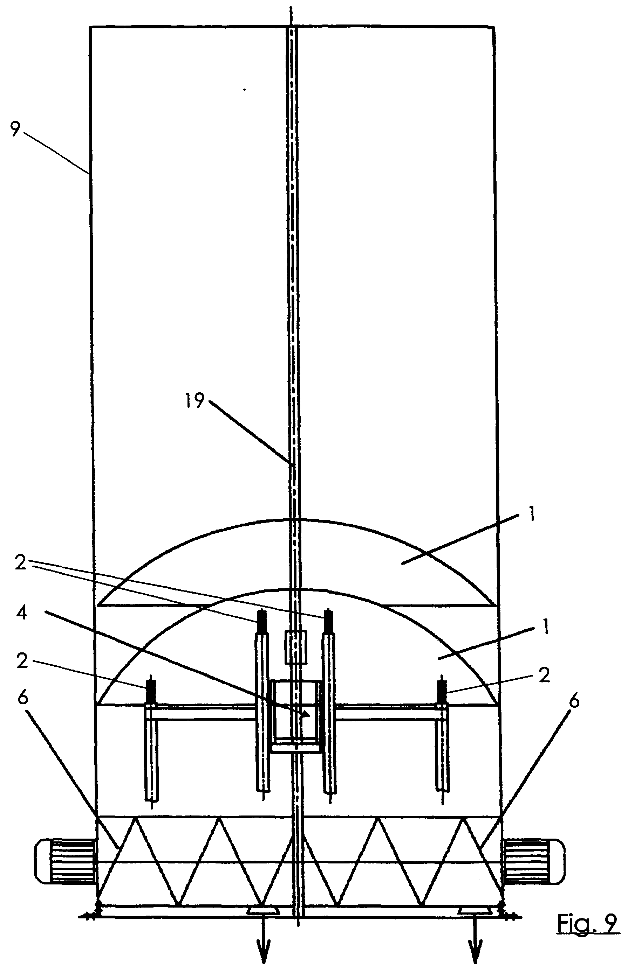

Fig. 8 zeigt eine weitere Ausführung des Silos ähnlich der in Fig. 5 dargestellten Ausführungsform, wobei die Zwischenwand 19 jedoch über die Vibrationsböden 1 hinaus bis zu der Dosierschnecke 6 nach unten verläuft. Der Grund dafür ist aus Fig. 9 ersichtlich, wo auf beiden Seiten der Seitenwand 19 jeweils eine Dosierschnecke 6 angeordnet ist. Dadurch wird ein Vermischen der auf beiden Seiten der Seitenwand 19 sich befindlichen Stoff vollständig verhindert und diese können getrennt voneinander entsorgt werden. Auch hierbei können die beiden voneinander unabhängig antreibbaren Dosierschnecken 6 abweichend von der Darstellung gemäß Fig. 9 verschiedene Wendelsteigungen bzw. Durchmesser aufweisen.

An die Dosierschnecke 6 anschließend kann eine nicht dargestellte Abführeinrichtung angeordnet sein, in welche die von der Dosierschnecke 6 ausgetragenen Stoffe gemeinsam oder auch voneinander getrennt abgeführt werden können. Somit ist bei Bedarf eine sehr exakte Dosierung bzw. Vermischung zweier oder bei der Verwendung mehrerer Zwischenwände 19 auch mehrerer Stoffe möglich. Die Abdichtung der Zwischenwand 19 gegenüber den Vibrationsböden 1 kann dabei in gleicher Weise wie in Fig. 7 dargestellt durch die Dichtungseinrichtung 20 erfolgen.

## Patentansprüche

1. Silo, insbesondere Hochsilo für schwerfließende, brückenbildende Schüttgüter mit ungleichen Materialabmessungen, insbesondere Müll, mit einem Silomantel und einer Austragseinrichtung im unteren Bereich des Silos,
**dadurch gekennzeichnet,** daß
1.1 die Austragseinrichtung wenigstens zwei zur Mitte hin nach unten geneigte Vibrationsböden (1) aufweist, welche auf Federeinrichtungen (2) gelagert sind,
1.2 die wenigstens zwei Vibrationsböden (1) durch ein oder mehrere Vibrationseinrichtungen (4), welche an den Vibrationsböden (1) angebracht sind, in Vibration versetzt werden,
1.3 die wenigstens zwei Vibrationsböden (1) eine gegeneinander gerichtete Neigung aufweisen,
1.4 die wenigstens zwei Vibrationsböden (1) derart angeordnet sind, daß deren Innenkanten (1a, 1b) in vertikaler Richtung höhenversetzt zueinander liegen.
1.5 die wenigstens zwei Vibrationsböden (1) sich wenigstens teilweise mit ihren Innenkanten (1a, 1b) überlappen oder die Innenkanten (1a, 1b) einen bestimmten Abstand voneinander in horizontaler Richtung aufweisen,
1.6 unterhalb der wenigstens zwei Vibrationsböden (1) ein Materialaustragsschacht (5) angebracht ist, in welchem ein Austragsglied (6) angeordnet ist, durch die ein dosierter Materialaustrag kontinuierlich oder im Intervallbetrieb erfolgt.

2. Vorrichtung nach Anspruch 1,
**dadurch gekennzeichnet,** daß die Vibrationseinrichtungen als Unwuchtvibratoren (4) ausgebildet sind.

3. Vorrichtung nach Anspruch 1 oder 2,
**dadurch gekennzeichnet,** daß das Silo zwei Vibrationsböden (1) aufweist, wobei die Vibrationsböden (1) gleiche oder unterschiedliche Formen und Abmessungen aufweisen.

4. Vorrichtung nach einem der Ansprüche 1 bis 3,
**dadurch gekennzeichnet,** daß der Materialaustragsschacht als Schneckeneinlauftrichter (5) ausgebildet ist, und daß das Austragsglied als Dosierschnecke (6) ausgebildet ist.

5. Vorrichtung nach einem der Ansprüche 1 bis 4,
**dadurch gekennzeichnet,** daß die Vibrationsböden (1) über eine Unterkonstruktion (3) am Boden im Silo oder unterhalb des Silos befestigt sind.

6. Vorrichtung nach einem der Ansprüche 1 bis 5,
**dadurch gekennzeichnet,** daß zur Abdichtung gegen durchfließendes Material zwischen den Vibrationsböden (1) und dem Silomantel (9) Leitbleche (10) und/oder äußere Dichtmanschetten (11) vorgesehen sind.

7. Vorrichtung nach einem der Ansprüche 1 bis 6,
**dadurch gekennzeichnet,** daß im Bereich der Vibrationsböden (1) wenigstens eine Luftkanone (8) angeordnet ist, die bei Materialstau einen Luftdruckstoß über die Vibrationsböden (1) in Richtung des Schneckeneinlauftrichters (5) ausübt, wobei die Steuerung der Vibrationsböden (1) und der Luftkanonen (8) über einen im Schneckeneinlauftrichter (5) angeordneten Füllstandsmesser (7) erfolgt

8. Vorrichtung nach einem der Ansprüche 1 bis 7,
**dadurch gekennzeichnet,** daß die Vibrationsböden (1) separat und unabhängig vom Einsatz der Luftkanonen (8) sowie kontinuierlich oder im Intervalleinsatz betreibbar sind.

9. Vorrichtung nach einem der Ansprüche 1 bis 8,
**dadurch gekennzeichnet,** daß der Silomantel (9) im Querschnitt eine Kreisform aufweist, und daß die beiden Vibrationsböden (1) daran angepaßte Halbkreisformen aufweisen.

10. Vorrichtung nach Anspruch 1,
**dadurch gekennzeichnet,** daß die Vibrationseinrichtungen als Kurbeltriebe (4) ausgebildet sind.

11. Vorrichtung nach Anspruch 10,
**dadurch gekennzeichnet,** daß die Kurbeltriebe (4) jeweils eine außerhalb oder innerhalb des Silomantels (9) angeordnete Halteeinrichtung (16), auf welcher ein Antriebsmotor (13) und eine Exzenterscheibe (14) angeordnet sind, sowie eine Schubstange (18) aufweisen, wobei die Schubstange (18) mit der Exzenterscheibe (14) und über einen Befestigungskloben (15) mit dem Vibrationsboden (1) verbunden ist, und wobei der Antriebsmotor (13) mit der Umlenkrolle (14) über einen Riemen (17) verbunden ist.

12. Vorrichtung nach einem der Ansprüche 1 bis 11,
**dadurch gekennzeichnet,** daß innerhalb des Silomantels (9) wenigstens eine im wesentlichen vertikal ausgerichtete Zwischenwand (19) angeordnet ist, welche sich wenigstens annähernd von der Oberseite des Silos bis zu den Vibrationsböden (1) erstreckt.

13. Vorrichtung nach Anspruch 12,
**dadurch gekennzeichnet,** daß die Dosierschnecke (6) unterschiedliche Durchmesser und/oder Wendelsteigungen aufweist.

14. Vorrichtung nach einem der Ansprüche 1 bis 11,
**dadurch gekennzeichnet,** daß innerhalb des Silomantels (9) wenigstens eine im wesentlichen vertikal ausgerichtete Zwischenwand (19) angeordnet ist, welche sich wenigstens annähernd von der Oberseite des Silos bis zu der Dosierschnecke (6) erstreckt.

15. Vorrichtung nach Anspruch 14,
**dadurch gekennzeichnet,** daß auf beiden Seiten der Zwischenwand (19) jeweils eine Dosierschnecke (6) angeordnet ist.
